# EUROPEAN PATENT SPECIFICATION

(11) **EP 0 467 229 B1**
(45) Date of publication and mention of the grant of the patent: **02.10.1996**
(21) Application number: 91111618.4
(22) Date of filing: 12.07.1991
(51) Int. Cl.: F16L 5/02, F16L 7/00, F16L 19/00

(54) **Slip-preventing bushing for pipes**
Schlupfverhindernde Buchse für Rohre
Manchon antidérapant pour tuyaux

(30) Priority: 17.07.1990 IT 8559990
(43) Date of publication of application: 22.01.1992
(73) Proprietor: Mastromatteo, Ciro, I-36043 Camisano Vicentino (VI) (IT)
(72) Inventor: Mastromatteo, Ciro, I-36043 Camisano Vicentino (VI) (IT)
(74) Representative: Forattini, Amelia

(56) References cited:
- EP-A- 0 073 083
- AT-B- 347 657
- DE-A- 3 329 994
- DE-B- 2 045 132

## Description

The invention concerns a slip-preventing bushing suited for sealing pipes.

It is a known fact that in the plumbing field, fittings of various typs are used in order to connect pipes with each other or with manifolds or with terminal elements of different types. Some embodiments of said fittings foresee the use of a nut, within which a shaped elastic ring is inserted. This, in turn, is slipped over the exterior of the pipe to be connected. A shaped bushing is positioned below the elastic ring and co-axial both with it and with the pipe to be connected. Said bushing is preferably made of plastic material and its lower end is suited to couple with the body on which the pipe is to be sealed, which could be a pipe-connection, a fitting, the body of a pump or similar. The sealing of the nut accomplishes at the same time both the radial compression of the elastic ring against the pipe and the axial compression of the shaped bushing against the body on which the pipe is to be sealed, thereby obtaining at the same time both the water and the mechanical sealing.

Said types of fittings present, however, the inconvenience that, since the elastic ring and the shaped bushing consist of two bodies separated from each other, the operator performing the assembly is forced to a loss of time, because he has to look for them and connect them together.

Another inconvenience arises from the possibility that, because of lack of attention or of experience, the operator may make a mistake in assembling the elastic ring on the shaped bushing, thereby performing a connection which does not guarantee a sufficient water sealing, even if the mechanical tighteness is guaranteed.

AT-A-347657 discloses a bushing device for sealingly coupling a pine to a valve or to other components and including all the features defined in the preamble of Claim 1. However this prior bushing device comprises two separated elements and cannot insure both mechanical tightness and water seal.

It is the purpose of the present invention to disclose a slip-preventing bushing consisting of a single element and suited to tightly connect pipes with each other or with bodies or terminal elements.

Another purpose of the invention is for the slip-preventing bushing to present an assembly direction which is difficult to confuse, so as to avoid the danger of assemblying it backwards. The described purposes and others, which will be better illustrated hereinafter, are reached by a slip-preventing bushing for pipes in accordance with the enclosed Claim 1.

According to a preferred embodiment the slip-preventing bushing according to the invention presents a permanent male/female junction between the elastic ring and the annular element obtained through the union between an annular rim protruding from the lower end of the elastic ring and an annular slot obtained in the upper end of the annular element.

Advantageously according to the invention, the disclosed slip-preventing bushing is more economical and its assembly is easier, since it consists of a single piece.

Further scope of applicability of the present invention will become more apparent from the detailed description given hereinafter. However, it should be understood that the detailed description and specific examples, while indicating preferred embodiments of the invention, are given by way of illustration only, wherein:
- Fig. 1 shows a longitudinal cross-section of the slip-preventing bushing according to the invention in the embodiment with its upper collar having a protruding rim;
- Fig. 2 shows the bushing of Fig. 1 in an axonometric representation;
- Fig. 3 shows the longitudinal cross-section of an embodiment differring from the bushing of Fig. 1 with a profile connected with the inner diameter through a cylindrical area;
- Fig. 4 shows the longitudinal cross-section of another embodiment of the bushing of Fig. 1 with an upper cylindrical collar;
- Fig. 5 shows the longitudinal cross-section of yet another embodiment of the bushing of Fig. 1 without the upper collar;
- Fig. 6 shows an example of application of the slip-preventing bushing in the embodiment represented in Fig. 1;
- Fig. 7 shows an example of application of the different embodiment represented in Fig. 3;
- Fig. 8 shows an example of application of the other embodiment represented in Fig. 4;
- Fig. 9 shows an example of application of the embodiment reepresented in Fig. 5;
- Fig. 10 shows yet another embodiment of the invention;
- Fig. 11 shows yet another embodiment of the invention.

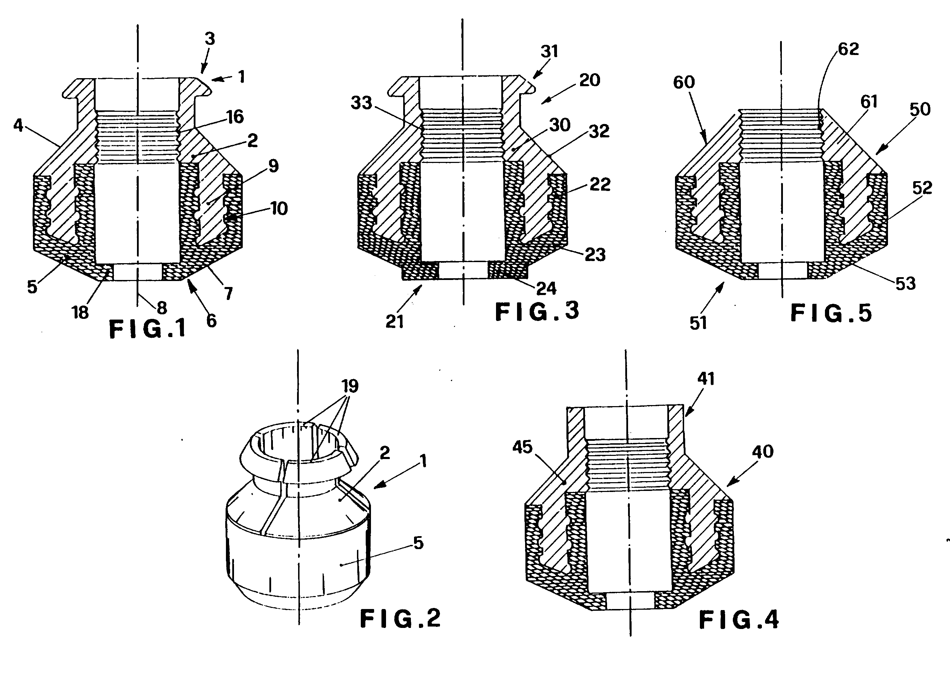

As can be observed in Fig. 1, the slip-preventing bushing according to the invention is indicated as a whole with 1 and it consists of an elastic ring 2, presenting an upper collar 3 protruding outwards and an intermediate profile 4 in the shape of a truncated cone. Said elastic ring 2 is co-axially aligned with an annular element 5 presenting outwardly an essentially cylindrical shape, while its lower end 6 presents a profile 7 in the shape of a truncated cone converging toward the central axis 8 of bushing 1. The elastic ring 2 and the annular element 5 are joined together through an annular rim 9 protruding from the lower end of the elastic ring 2, which couples with the inside of an annular slot 10 obtained within the upper end of the annular element 5. The annular element 5, which is preferably made of plastic or rubber material, is directly joined with the elastic ring 2 during the manufacturing process of the annular element 5 itself, the junction occurring preferably through thermoforming or through injection, so that, at the end of the process for the moulding of the annular element 5, the elastic ring 2 and the annular element 5 constitute a single piece.

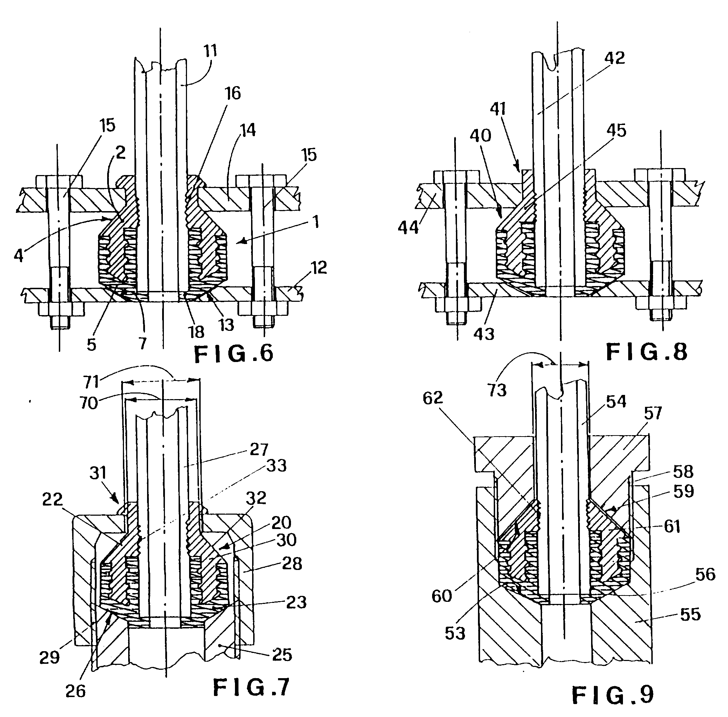

The thus manufactured slip-preventing bushing 1 can usefully be used to perform, as can be observed in Fig. 6, the connection between a pipe 11 and, for instance, a pump body 12, presenting a seat 13 in the shape of a truncated cone. In this case the end of pipe 11 is placed flush against the indented ring 18 of the annular element 5 of the bushing, while a flange 14 is made to adhere in correspondence with the intermediate profile 4 in the shape of a truncated cone of the elastic ring 2 of bushing 1. The profile 7 in the shape of a truncated cone at the lower end of the annular element 5 is pressed against seat 13 of the pump body by means of one of more screws 15. At the same time, because of the force which the sealing screws transmit to the surface in the shape of a truncated cone, and because of the component of the radial force arising therefrom on said surface 4, a plurality of saw teeth 16 which are present within the elastic ring 2 are forced radially against pipe 11 and thereby prevent said pipe from axially slipping out, their task being made easier by the deformability in the radial direction of the elastic ring, due to the presence of the radial slits 19, which develop axially and are visible in Fig. 2.

Thus both the mechanical sealing between pipe 11 and the pump body 12 and the axial sealing of profile 7 of the annular element 5 against profile 13 of the pump body 12 are achieved.

A different embodiment of the bushing according to the invention is represented in Fig. 3, wherein said embodiment is indicated as a whole with 20. It can be observed therein that the lower end 21 of the annular element 22 presents at its terminal end of profile 23, in the shape of a truncated cone, a tubular cylindrical area 24, which, as can be observed in the example of application shown in Fig. 7, acts as a guide when the annular element 22 of bushing 20 is connected with a cylindrical body 25 presenting a flare 26 at its end. In this case, too, pipe 27 is inserted into bushing 20, which is then connected with the cylindrical body 25 by sealing a nut 28 on the threaded fitting 29 which is present on the cylindrical body 25. It can be observed that nut 28 becomes compressed between the upper protruding collar 31 and the intermediate profile 32 in the shape of a truncated cone belonging to the elastic ring 30. In the same way as has been previously described, the sealing of nut 28 generates both a radial and an axial compression which results in the mechanical and water sealing between pipe 27 and bushing 20, thanks to the slits 33 in the shape of saw teeth, and between bushing 20 and the cylindrical body 25, thanks to the interference of its profile 23 in the shape of a truncated cone against the flare 26 of the cylindrical body 25. In this case, too, the elastic ring 30 presents some slits, not represented in Fig. 3, which are arranged radially and develop in the axial direction in order to yield elasticity during the sealing operation.

Another embodiment of the bushing according to the invention is represented in Fig. 4, wherein the bushing, indicated as a whole with 40 presents its elastic ring 45 with a cylindrical upper collar 41.

An example of application of this type of embodiment is represented in Fig. 8, wherein it can be observed that bushing 40 connects a pipe 42 with a pump body 43. It will be noticed that in this different embodiment of bushing 40, too, the upper cylindrical collar 41 protects pipe 42 against the rubbing action against the sealing flange 44 and performs a better guidance of pipe 42 in the axial direction. Moreover, it permits the visual control of the elastic ring 45 during the sealing process.

In this embodiment, too, the elastic ring 45 presents in the upper collar 41 some radial slits developing axially (not represented in the Figure) in order to increase the elasticity during the sealing process.

Yet another embodiment of the bushing according to the invention is represented in Fig. 5, wherein it will be noticed that the elastic ring 50 presents no upper collar, while the lower end 51 of the annular element 52 presents a profile 53 in the shape of a truncated cone. Said lower end 51 could eventually be shaped also with a central cylindrical area as in the embodiment represented in Fig. 3. Said embodiment of the bushing 50 represented in Fig. 5 is suited to be applied as in the example shown in Fig. 9, i.e. it is suited to connect a pipe 54 with a cylindrical body 55 presenting an inner flared seat 56. In this case the sealing occurs through a nut 57 presenting a male thread 58, which axially forces its slanted surf ace 59 against the slanted surface 60 of the elastic ring 61, thereby causing the seal between the lower slanted profile 53 of the annular element 52 of bushing 50 against the flare 56 of the cylindrical body 55. In the same way, the axial force causes the interference of the saw-teeth 62, which are present within the elastic ring 61, against pipe 54, said interference being made easier, in this case, too, by the presence of some radial slits developing in the axial direction in the upper end of the elastic ring 61.

It must be observed that all the embodiments of the slip-preventing bushing according to the invention, wherein the elastic ring presents an upper collar, as will be observed in the Figs. from 1 to 4, the outer diameter of the collar is smaller than the inner diameter of the flange or nut within which it is matched.

This is done with the purpose of preventing the nut from transmitting the torque to the bushing during the sealing process, as can be noticed in Fig. 7, wherein the bushing is sealed by means of nut 28. For this reason the outer diameter 70 of the elastic ring 30 is smaller than the inner diameter 71 of nut 28.

In the same way and for the same reason, whenever the bushing according to the invention is embodied as represented in Fig. 5 and is applied as in the example of Fig. 9, nut 57 with its male thread 58 presents an inner diameter 73 exceeding the outer diameter 74 of pipe 54.

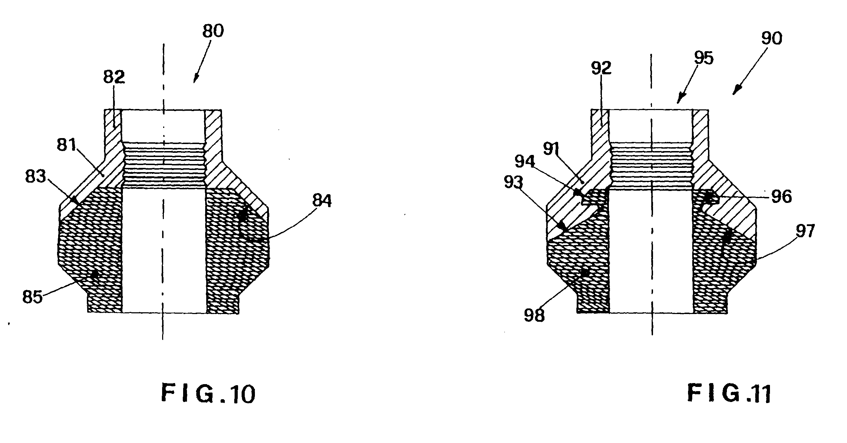

Yet another embodiment of the bushing according to the invention is represented in Fig. 10, wherein said bushing is indicated as a whole with 80. It will be observed that the elastic ring 81 of bushing 80 presents an upper cylindrical collar 82 and an inner tapered surface 83 coupling with a corresponding upper outer tapered surface 84 belonging to the annular element 85. The union hetween the tapered surfaces 83 and 84 occurs by gluing. Another embodiment of the bushing according to the invention is represented in Fig. 11, wherein said bushing is indicated as a whole with 90.

It can be observed that the elastic ring 91 of bushing 90, also presenting an annular cylindrical collar 92 and an inner tapered surface 93, is complete with an annular indentation 94 obtained at the base of the threaded opening 95. Said annular indentation matches through interference a corresponding protruding annular rim 96 obtained in the upper part 97, also tapered, of the annular element 98, thereby achieving the junction between the elastic ring 91 and the annular element 98.

In order to insure a better safety, the two tapered surfaces 93 and 97 may also be glued together.

On the basis of what has been described, it is easy to understand that the bushing according to the invention achieves all the proposed purposes since, because it is made in a single piece, it permits to save in labour costs, because its assembly is easier. Moreover, thanks to its special profile and, more specifically, because of the presence in all the embodiments of the indented ring which rests flush against the pipe which is connected with the bushing, it is easy to understand that it is practically impossible to assemble the bushing backwards.

## Claims

1. A bushing for sealing a pipe connected with a coupling element belonging to a plumbing installation, comprising:
- an elastic ring (2, 30, 45, 61, 71, 81, 91) made of metallic or of non-metallic material, where a pipe is mechanically blocked in its inner cylindrical surface;
- an annular element (5, 22, 52, 75, 85, 98) with a cylindrical inner surface to be sealingly coupled with said pipe and an outer surface having such a profile like the part of the body (12, 25, 43, 55, 76) to be connected with the bushing;
characterized in that said elastic ring has at one end thereof longitudinal slits (19) allowing the ring to deform radially, an inner rough surface (16, 33, 62) for sealingly coupling to outer surface of the pipe to be connected and an outer surface profiled in the shape of a truncated cone converging toward the end of the ring having the slits, said profiled outer surface transmitting the component of the radial force due to the axial sealing force exerted on the bushing, and in that said annular element is made of rubber or any other material equivalent to it and has a cylindrical smooth inner surface with a diameter substantially equal to the external diameter of the pipe to be coupled, an outer surface having the profile of a truncated cone converging towards the end opposite to that of the elastic ring provided with slits, said elastic ring and said annular element being coupled so as to form a single piece having the same axis.

2. A bushing (1, 20, 40, 50) according to claim 1, characterized in that the elastic ring presents an annular rim (9) inserted into a corresponding annular slot (10) of the annular element (5) which is present in an annular cavity comprised between the inner and the outer surface of the annular element (5), so as to achieve the permanent coupling between the elastic ring (2, 30, 45, 61) and the annular element (5, 22, 52).

3. A bushing according to claim 1, characterized in that said elastic ring has an annular collar.

4. A bushing according to claim 3, characterized in that the annular collar (3, 31) protrudes outwards.

5. A bushing according to claim 1, characterized in that said rough inner surface of the elastic ring (2, 30, 45, 61, 71) has a plurality of knurls in the shape of saw teeth (16, 33, 62).

6. A bushing according to claim 1, characterized in that the truncated cone surface (23) of said annular element (22) ends with a protruding cylindrical area (24).

7. A bushing (80) according to claim 1, characterized in that the elastic ring (81) presents an inner tapered surface (83) coupling with a corresponding outer tapered surface (84) belonging to the annular element (85), wherein the junction between said tapered surfaces (83, 84) is obtained through gluing.

8. A bushing (90) according to claim 1, characterized in that the elastic ring (91) presents in its interior an annular indentation (94) into which the protruding annular rim (96) obtained in the upper part of the annular element (98) is connected through interference.

## Patentansprüche

1. Buchse zum Dichten eines Rohres, das mit einem verbindungselement, das zu einer Plombiereinrichtung gehört, verbunden ist, mit
- einem elastischen Ring (2, 30, 45, 61, 71, 81, 91) aus metallischem oder nicht-metallischem Material, wo ein Rohr in seiner zylindrischen Innenfläche mechanisch verriegelt wird;
- einem ringförmigen Element (5, 22, 52, 75, 85, 98) mit einer zylindrischen Innenfläche, die dichtend mit dem Rohr verbunden werden soll und einer Außenfläche, die ein solches Profil wie der Teil des Körpers (12, 25, 43, 55, 76) hat, der mit der Buchse zu verbinden ist;
dadurch gekennzeichnet, daß der elastische Ring an einem Ende davon Längsschlitze (19), die dem Ring ermöglichen, sich radial zu verformen, eine rauhe Innenfläche (16, 33, 62) zur dichtenden Verbindung mit der zu verbindenden Außenfläche des Rohres und eine Außenfläche hat, die ein Profil in Form eines Kegelstumpfes hat, der zu dem Ende des Ringes hin, das die Schlitze hat, zusammenläuft, wobei die Profil-Außenfläche die Komponente der radialen Kraft aufgrund der auf die Buchse ausgeübten axialen Dichtungskraft überträgt, und daß das ringförmige Element aus Gummi oder irgendeinem anderen, ihm äquivalenten Material hergestellt ist und eine zylindrische, glatte Innenfläche mit einem Durchmesser hat, der im wesentlichen gleich dem Außendurchmesser des zu verbindenden Rohres ist, wobei eine Außenfläche das Profil eines Kegelstumpfes hat, der zu dem Ende hin zusammenläuft, welches dem des mit Schlitzen versehenen elastischen Ringes gegenüberliegt, wobei der elastische Ring und das ringförmige Element derart verbunden werden, daß sie ein einziges Stück bilden, das dieselbe Achse hat.

2. Buchse (1, 20, 40, 50) gemäß Anspruch 1, dadurch gekennzeichnet, daß der elastische Ring eine ringförmige Randzone (9) aufweist, die in einen entsprechenden ringförmigen Schlitz (10) des ringförmigen Elementes (5) eingeschoben ist, der in einem ringförmigen Hohlraum angeordnet ist, der zwischen der Innen- und der Außenfläche des ringförmigen Elementes (5) liegt, um somit die dauerhafte Verbindung zwischen dem elastischen Ring (2, 30, 45, 61) und dem ringförmigen Element (5, 22, 52) zu erreichen.

3. Buchse gemäß Anspruch 1, dadurch gekennzeichnet, daß der elastische Ring einen ringförmigen Kragen hat.

4. Buchse gemäß Anspruch 3, dadurch gekennzeichnet, daß der ringförmige Kragen (3, 31) nach außen übersteht.

5. Buchse gemäß Anspruch 1, dadurch gekennzeichnet, daß die rauhe Innenfläche des elastischen Ringes (2, 30, 45, 61, 71) eine Vielzahl von Rändelungen in der Form von Sägezähnen (16, 33, 62) aufweist.

6. Buchse gemäß Anspruch 1, dadurch gekennzeichnet, daß die Kegelstumpffläche (23) des ringförmigen Elementes (22) mit einem überstehenden, zylindrischen Bereich (24) endet.

7. Buchse (80) gemäß Anspruch 1, dadurch gekennzeichnet, daß der elastische Ring (81) eine konisch zulaufende Innenfläche (83) aufweist, die mit einer entsprechenden konisch zulaufenden Außenfläche (84) verbunden ist, die zu dem ringförmigen Element (85) gehört, wobei die Verbindung zwischen den konisch zulaufenden Flächsen (83, 84) durch Verleimung erreicht wird.

8. Buchse (90) gemäß Anspruch 1, dadurch gekennzeichnet, daß der elastische Ring (91) in seinem Inneren eine ringförmige Vertiefung (94) aufweist, mit der der überstehende ringförmige Bereich (96), der in dem oberen Teil des ringförmigen Elementes (98) angeordnet ist, durch Wechselwirkung verbunden ist.

## Revendications

1. Manchon destiné à fixer de façon étanche un tube relié à un élément de raccordement appartenant à une installation de plomberie, comprenant :
- une bague élastique (2, 30, 45, 61, 71, 81, 91) réalisée à partir d'une matière métallique ou non-métallique, où un tube est mécaniquement bloqué à la surface cylindrique intérieure de la bague ;
- un élément annulaire (5, 22, 52, 75, 85, 98) ayant une surface cylindrique intérieure destinée à être accouplée de façon étanche audit tube, et une surface extérieure présentant un profil similaire à celui de la partie du corps (12, 25, 43, 55, 76) destinée à être reliée au manchon ;
caractérisé en ce que ladite bague élastique comporte, à l'une de ses extrémités, des fentes longitudinales (19) permettant une déformation radiale de la bague, une surface rugueuse intérieure (16, 33, 62) destinée à s'agripper de façon étanche à la surface extérieure du tube à raccorder, et une surface extérieure profilée en forme d'un cône tronqué, convergeant vers l'extrémité de la bague qui présente les fentes, ladite surface profilée extérieure transmettant la composante de force radiale qui est due à la force de serrage axiale exercée sur le manchon, et en ce que ledit élément annulaire est réalisé en caoutchouc ou tout autre matériau équivalent, et comporte une surface intérieure cylindrique lisse ayant un diamètre substantiellement égal au diamètre extérieur du tube à raccorder, une surface extérieure présentant le profil d'un cône tronqué, convergeant vers l'extrémité opposée à celle de la bague élastique pourvue des fentes, ladite bague élastique et ledit élément annulaire étant couplés l'un à l'autre de manière à former une seule pièce ayant le même axe.

2. Manchon (1, 20, 40, 50) selon la revendication 1, caractérisé en ce que la bague élastique présente une collerette annulaire (9) insérée dans une gorge annulaire correspondante (10) de l'élément annulaire (5), qui est présente dans une cavité annulaire comprise entre les surfaces intérieure et extérieure (le l'élément annulaire (5), de manière à obtenir un accouplement permanent entre la bague élastique (2, 30, 45, 61) et l'élément annulaire (5, 22, 52).

3. Manchon selon la revendication 1, caractérisé en ce que ladite bague électrique comporte une collerette annulaire.

4. Manchon selon la revendication 3, caractérisé en ce que la collerette annulaire (3, 31) fait saillie vers l'extérieur.

5. Manchon selon la revendication 1, caractérisé en ce que ladite surface rugueuse intérieure de ladite bague élastique (2, 30, 45, 61, 71) comporte une série de dentelures en forme de dents de scie (16, 33, 62)

6. Manchon selon la revendication 1, caractérisé en ce que la surface tronconique (23) dudit élément annulaire (22) se termine par une zone cylindrique saillante (24).

7. Manchon (80) selon la revendication 1, caractérisé en ce que la bague élastique (81) présente une surface conique intérieure (83) accouplée à une surface conique extérieure (84) appartenant à l'élément annulaire (85), la liaison entre lesdites surfaces coniques (83, 85) étant obtenue par collage.

8. Manchon (90) selon la revendication 1, caractérisé en ce que ladite bague élastique (91) présente intérieurement un rainurage annulaire (94), dans lequel s'emboîte sous serrage la collerette saillante annulaire (96) aménagée sur la partie supérieure de l'élément annulaire (98).
